# EUROPEAN PATENT SPECIFICATION

(11) **EP 2 421 299 B1**
(45) Date of publication and mention of the grant of the patent: **09.09.2015**
(21) Application number: 10764118.5
(22) Date of filing: 19.04.2010
(51) Int. Cl.: H04B 7/155, H04W 72/12, H04W 84/04

(54) **RESOURCE SCHEDULING METHOD AND SYSTEM, BASE STATION AND RELAY NODE**
RESSOURCENPLANUNGSVERFAHREN UND SYSTEM, BASISSTATION UND RELAISKNOTEN
PROCÉDÉ ET SYSTÈME DE PLANIFICATION DE RESSOURCE, STATION DE BASE ET NOEUD DE RELAIS

(30) Priority: 17.04.2009 CN 200910082030; 20.04.2009 CN 200910082260
(43) Date of publication of application: 22.02.2012
(73) Proprietor: China Academy of Telecommunications Technology, Haidian District, Beijing 100191 (CN)
(72) Inventor: ZHANG, Wenjian, Beijing 100083 (CN); PAN, Xueming, Beijing 100083 (CN); SHEN, Zukang, Beijing 100083 (CN); XIAO, Guojun, Beijing 100083 (CN); WANG, Libo, Beijing 100083 (CN)
(74) Representative: Körber, Martin Hans
(86) International application number: PCT/CN2010/071864
(87) International publication number: WO 2010/118705

(56) References cited:
- CN-A- 101 106 794
- CN-A- 101 106 807
- GB-A- 2 406 018
- US-A1- 2007 060 050
- NOKIA ET AL: "Considerations on TDD Relay", 3GPP DRAFT; R1-090244, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090107, 7 January 2009 (2009-01-07), XP050318172, [retrieved on 2009-01-07]
- ZTE: "Control Channel Structure and Mapping Pattern of Backhaul Link", 3GPP DRAFT; R1-091424 CONTROL CHANNEL STRUCTURE AND MAPPING PATTERN OF BACKHAUL LINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050339004, [retrieved on 2009-03-17]
- NORTEL: "Discussion paper on the control channel and data channel optimization for relay link", 3GPP DRAFT; R1-091384(NORTEL-CONTROL_DATA_RELAY_LINK_D ESIGN_IN_LTE-A), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050338973, [retrieved on 2009-03-17]
- HUAWEI: "Summary and proposal of relay frame structure", 3GPP DRAFT; R1-090827, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318682, [retrieved on 2009-02-03]

## Description

### Field of the Invention

The present invention relates to mobile communication technologies, and more particularly to a resource scheduling method and system, a Base Station (BS) and a Relay Node (RN).

### Background of the Invention

The application of Relay Node (RN) makes a Relay based mobile communication system have three radio links, i.e., an eNB-macro UE direct link, an eNB-RN backhaul link, and a RN-relay UE access link, which are respectively called a direct link, a backhaul link and an access link for short. The transceiver of the RN adopts a Time Division Dual (TDD) mode, i.e., in the TDD mode, the receiving and transmitting can not be performed at the same time.

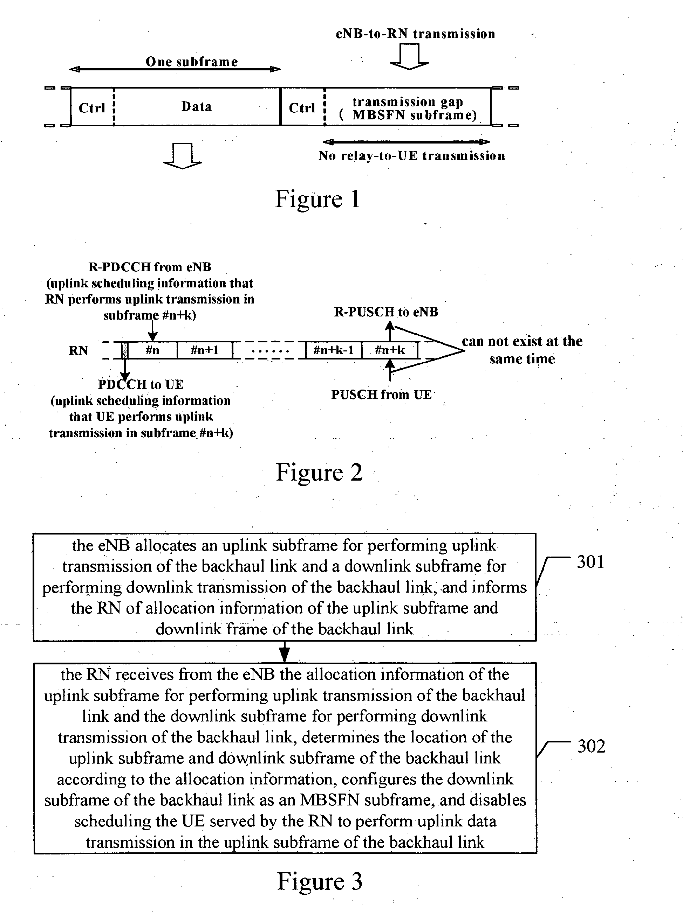

The backhaul link and the access link may use the same frequency, but the transmitter of the RN interferes with the receiver of the RN unless signals received by the receiver are completely separated from signals transmitted by the transmitter. And thus, a downlink backhaul link and a downlink access link usually can not use the same frequency resources at the same time, and an uplink backhaul link and an uplink access link also can not use the same frequency resources at the same time. In order to avoid the interference, a following processing mode is usually adopted in the prior art. If the RN receives data from a BS (which is also called as an eNB), the RN does not transmit data to a User Equipment (UE), i.e., a "gap" is created by using a Multicast/Broadcast over a Single Frequency Network (MBSFN) subframe in the transmission time of the downlink access link. Figure 1 is a schematic diagram illustrating a procedure of performing downlink transmission of a relay link by using a MBFSN subframe in the prior art. As shown in Figure 1, in the "gap", the RN only receives data from the eNB, but does not transmit data to the UE; the "Ctrl" is used for transmitting control signaling to the UE by the RN, i.e., used for performing scheduling for the UE.

The mode shown in Figure 1 solves the interference problem, but results in a new problem, which will be illustrated hereinafter.

Figure 2 is a schematic diagram illustrating a conventional resource scheduling mode. As shown in Figure 2, in a subframe n, a UE receives Downlink Control Information (DCI) sent by a RN through a Physical Downlink Control Channel (PDCCH), where the DCI contains uplink scheduling information that the RN schedules the UE to perform uplink data transmission in a subfram n+k. Correspondingly, the UE transmits uplink data to the RN in the subframe n+k through a Physical Uplink Shared Channel (PUSCH). After transmitting the DCI to the UE, the RN receives a DCI sent by the eNB through a Relay Physical Downlink Control Channel (R-PDCCH), where the DCI received by the RN contains uplink scheduling information that the eNB schedules the RN to perform uplink data transmission in the subframe n+k. Correspondingly, the RN transmits uplink data in the subframe n+k through a Relay Physical Uplink Shared Channel (R-PUSCH). Since the uplink data transmission of the backhaul link or the access link is performed in the whole subframe, in the same subframe, the RN performs a transmission operation for the eNB, and also performs a receiving operation for the UE, which results in uplink transmission conflict.

In addition, though the mode shown in Figure 1 can solve the interference problem, it is unclear in the prior art that how the RN learns which subframe will be taken as a MBSFN subframe. Therefore, the RN can not learn when to receive the R-PDCCH containing the uplink scheduling information sent by the eNB, further it can not be determined when uplink transmission conflict occurs, and thus the uplink transmission conflict can not be solved.

NOKIA ET AL: "Considerations on TDD Relay" discloses that there is the same TDD UL-DL configuration between eNB-RN link and RN-UE link. In such case, then naturally we can set some downlink subframes to MBSFN subframe to allow RN to receive from mother eNB and "null" some UL subframe of UE-RN link when RN is transmitting to the mother eNB. To null UL transmission of UE-RN link, it is easy to use scheduling restrictions to avoid UL transmission.

ZTE: "Control Channel Structure and Mapping Pattern of Backhaul Link" discloses that, in centralized scheduling, eNB is responsible for resources allocations of relay link, access link and direct link between the eNB and UEs; a RN needs to decode not only the DL/UL grant information for itself, but also the control information for its subordinate UEs; in another word, there should be two stages of control information in DL backhaul link, one for DL/UL grant of RN, the other for DL/UL grant of the subordinate UEs; the second stage control information can be passed to UEs.

NORTEL: "Discussion paper on the control channel and data channel optimization for relay link" discloses that, if such configurations are semi-static, such signal could be defined at higher-layer, could be broadcasted in channels, and could also be carried in a new RRC signal or be part of existing RRC signal such as "MBSFN-SubframeConfiguration"; in this R-PDCCH zone, a channel called R-PCFICH (relay PCFICH) similar as that of PCFICH can be adopted to indicate the number of symbols in the R-PDCCH zone; this R-PCFICH could be transmitted in the first symbol in the R-PSCCH zone; the number of symbols needed for carrying R-PDCCH could also be semi-statically configured and signaled through high-layer if such number is relatively static.

HUAWEI: "Summary and proposal of relay frame structure" discloses the HARQ timing and grant association of all TDD configurations according to Rel-8 specification.

### Summary of the Invention

Examples of the present invention provide a resource scheduling method and system, a BS and a RN, by which a MBSFN subframe can be indicated to the RN, and uplink transmission conflict can be avoided.

In order to achieve the above object, the technical solution of the present invention is implemented as follows.

A resource scheduling method includes:
allocating, by a Base Station (BS), an uplink subframe for performing uplink transmission of a backhaul link and a downlink subframe for performing downlink transmission of the backhaul link, and sending to a Relay Node (RN) one of allocation information of the uplink subframe and allocation information of the downlink frame, so that the RN determines, according to a predefined timing relationship, the allocated downlink subframe when receiving the allocation information of the uplink subframe from the BS, and determines, according to the predefined timing relationship, the allocated uplink subframe when receiving the allocation information of the downlink subframe from the BS; where
the predefined timing relationship includes:
   a Hybrid Automatic Repeat Request (HARQ) timing relationship between a downlink subframe for transmitting uplink scheduling information and an uplink subframe for transmitting Physical Uplink Shared Channel (PUSCH), or
   a HARQ timing relationship between a downlink subframe for transmitting Physical Downlink Shared Channel (PDSCH) and an uplink subframe for transmitting uplink ACK/NACK, or
   a HARQ timing relation between an uplink subframe for transmitting PUSCH and a downlink subframe for transmitting downlink ACK/NACK.

A resource scheduling method includes:
receiving, by a Relay Node (RN), one of allocation information of an uplink subframe for performing uplink transmission of a backhaul link and allocation information of a downlink subframe for performing downlink transmission of the backhaul link from a Base Station (BS), wherein the uplink subframe and the downlink subframe are allocated by the BS;
determining, by the RN, location of the uplink subframe when receiving the allocation information of the uplink subframe, and determining location of the downlink subframe when receiving the allocation information of the downlink subframe;
determining, by the RN, according to the determined location of the uplink subframe and a predefined timing relationship, the allocated downlink subframe when receiving the allocation information of the uplink subframe, and determining (703), according to the determined location of the downlink subframe and the predefined timing relationship, the allocated uplink subframe when receiving the allocation information of the downlink subframe; where
the predefined timing relationship includes:
   a Hybrid Automatic Repeat Request (HARQ) timing relationship between a downlink subframe for transmitting uplink scheduling information and an uplink subframe for transmitting Physical Uplink Shared Channel (PUSCH), or
   a HARQ timing relationship between a downlink subframe for transmitting Physical Downlink Shared Channel (PDSCH) and an uplink subframe for transmitting uplink ACK/NACK, or
   a HARQ timing relation between an uplink subframe for transmitting PUSCH and a downlink subframe for transmitting downlink ACK/NACK.

A Base Station (BS) includes:
an allocating unit, configured to allocate an uplink subframe for performing uplink transmission of a backhaul link and a downlink subframe for performing downlink transmission of the backhaul link;
an informing unit, configured to send to a Relay Node (RN) one of allocation information of the uplink subframe and allocation information of the downlink frame, so that the RN determines, according to a predefined timing relationship, the allocated uplink subframe when receiving the allocation information of the downlink subframe from the BS, and determines, according to the predefined timing relationship, the allocated downlink subframe when receiving the allocation information of the uplink subframe from the BS; where
the predefined timing relationship includes:
   a Hybrid Automatic Repeat Request (HARQ) timing relationship between a downlink subframe for transmitting uplink scheduling information and an uplink subframe for transmitting Physical Uplink Shared Channel (PUSCH), or
   a HARQ timing relationship between a downlink subframe for transmitting Physical Downlink Shared Channel (PDSCH) and an uplink subframe for transmitting uplink ACK/NACK, or
   a HARQ timing relation between an uplink subframe for transmitting PUSCH and a downlink subframe for transmitting downlink ACK/NACK.

A RN includes:
a receiving unit, configured to receive one of allocation information of an uplink subframe for performing uplink transmission of a backhaul link and allocation information of a downlink frame for performing downlink transmission of the backhaul link from a Base Station (BS), where the uplink subframe and the downlink subframe are allocated by the BS;
a determining unit, configured to determine location of the uplink subframe when receiving the allocation information of the uplink subframe, determine location of the downlink subframe when receiving the allocation information of the downlink subframe, determine, according to the determined location of the uplink subframe and a predefined timing relationship, the allocated downlink subframe when receiving the allocation information of the uplink subframe, and determine, according to the determined location of the downlink subframe and the predefined timing relationship, the allocated uplink subframe when receiving the allocation information of the downlink subframe; where
the predefined timing relationship includes:
   a Hybrid Automatic Repeat Request (HARQ) timing relationship between a downlink subframe for transmitting uplink scheduling information and an uplink subframe for transmitting Physical Uplink Shared Channel (PUSCH), or
   a HARQ timing relationship between a downlink subframe for transmitting Physical Downlink Shared Channel (PDSCH) and an uplink subframe for transmitting uplink ACK/NACK, or
   a HARQ timing relation between an uplink subframe for transmitting PUSCH and a downlink subframe for transmitting downlink ACK/NACK.

As can be seen, in the technical solution of the present invention, the BS informs the RN of the allocated uplink subframe for performing uplink transmission of the backhaul link and the allocated downlink subframe for performing downlink transmission of the backhaul link. In this way, the RN may configure the downlink subframe of the backhaul link as a MBSFN subframe in a subsequent procedure, and disables scheduling the UE served by the RN to perform uplink data transmission in the uplink subframe of the backhaul link, so as to avoid uplink transmission conflict.

Further, in the technical solution of the present invention, the BS may only inform the RN of the allocated uplink subframe for performing uplink transmission of the backhaul link or the allocated downlink subframe for performing downlink transmission of the backhaul link, and then the RN may self-determine, according to the received informing message and the predefined timing relationship, a downlink subframe for performing downlink transmission of the backhaul link or an uplink subframe for performing uplink transmission of the backhaul link of which the BS does not inform. In this way, the BS does not need to inform the RN of the allocated uplink subframe and downlink subframe, so as to decrease signaling overhead.

### Brief Description of the Drawings

The schematic examples of the present invention will be illustrated hereinafter in detail with reference to the accompany drawings, so as to make those skilled in the art understand the above and other features and merits of the present invention clearly. In the drawings:
Figure 1 is a schematic diagram illustrating a procedure of performing downlink transmission of a relay link by using a MBFSN subframe in the prior art.
Figure 2 is a schematic diagram illustrating a conventional resource scheduling mode.
Figure 3 is a schematic flowchart illustrating a resource scheduling method according to a first example of the present invention.
Figure 4 is a schematic diagram illustrating the structure of a resource scheduling system according to the first example of the present invention.
Figure 5 is a schematic diagram illustrating the structure of an eNB according to the first example of the present invention.
Figure 6 is a schematic diagram illustrating the structure of a RN according to the first example of the present invention.
Figure 7 is a schematic flowchart illustrating a resource scheduling method according to a second example of the present invention.
Figure 8 is a schematic diagram illustrating the structure of an eNB according to the second example of the present invention.
Figure 9 is a schematic diagram illustrating the structure of a RN according to the second example of the present invention.

### Detailed Description of the Invention

In order to solve the problem in the prior art, the examples of the present invention provide a new resource scheduling method, which includes that: when a RN begins to access a network and does not perform actual communication, an eNB informs the RN of an allocated uplink subframe for performing uplink transmission of a backhaul link and an allocated downlink subframe for performing downlink transmission of the backhaul link, and the RN disables scheduling a UE served by the RN to perform uplink data transmission in the uplink subframe of the backhaul link, and configures the downlink subframe of the backhaul link as a MBSFN subframe.

In practical applications, the eNB may inform the RN of the uplink subframe for performing uplink transmission of the backhaul link and the downlink subframe for performing downlink transmission of the backhaul link, or only inform the RN of the uplink subframe for performing uplink transmission of the backhaul link or the downlink subframe for performing downlink transmission of the backhaul link. The RN determines, according to the uplink subframe of the backhaul link or the downlink subframe of the backhaul link of which the eNB informs and a predefined timing relationship, a downlink subframe or uplink subframe of the backhaul link of which the eNB does not inform.

The present invention will be described in detail hereinafter with reference to accompanying drawings and examples to make the object, technical solution and merits of the present invention clearer.

Figure 3 is a schematic flowchart illustrating a resource scheduling method according to a first example of the present invention. In this example, it is supposed that the eNB informs the RN of the allocated uplink subframe and downlink subframe of the backhaul link. As shown in Figure 3, the method includes the following steps.

Step 301: the eNB allocates an uplink subframe for performing uplink transmission of the backhaul link and a downlink subframe for performing downlink transmission of the backhaul link, and informs the RN of allocation information of the uplink subframe and downlink frame of the backhaul link.

In this step, it is a conventional technology that how the eNB allocates the uplink subframe for performing uplink transmission of the backhaul link and the downlink subframe for performing downlink transmission of the backhaul link, and will not be described in detail. The mode of informing the RN will be described hereinafter in detail.

One mode of informing the RN includes directly informing the RN of location information of the uplink subframe of the backhaul link and location information of the downlink subframe of the backhaul link. In the prior art, a perfect MBSFN subframe informing mode has been provided, but not applied between the eNB and the RN. The MBSFN subframe informing mode is a bitmap mode, and includes two cases.
A) Bitmap that covers one radio frame BIT STRING (SIZE(6))
B) Bitmap that covers four continuous radio frames BIT STRING (SIZE(24))

The bitmap mode may be used to inform the RN of the location of the uplink subframe of the backhaul link and the location of the downlink subframe of the backhaul link.

In a system adopting a Frequency Division Dual (FDD) mode, since an uplink operation and a downlink operation are performed in different frequency bands, two bitmaps are needed to inform the RN of the location of the uplink subframe of the backhaul link and the location of the downlink subframe of the backhaul link. In each radio frame, downlink subframes 0, 4, 5 and 9 are used to transmit synchronous signals and broadcast messages, thus can not be configured as MBSFN subframes and can not be used to transmit downlink data of the backhaul link. If the mode A) is adopted, the downlink subframe of the backhaul link is indicated by 6 bits. Since the allocation of the uplink subframe of the backhaul link is not limited, 10 bits are needed to indicate the uplink subframe of the backhaul link, and each bit corresponds to 0 or 1. When the corresponding subframe is a subframe of the backhaul link, the corresponding bit is configured as 1.

In a system adopting a TDD mode, since an uplink operation and a downlink operation are performed in the same frequency band, the uplink subframe and downlink subframe of the backhaul link may be indicated by a uniform bitmap. Since the subframes 0, 1, 5 and 6 can not be configured as MBSFN subframes, in the single radio frame, the uplink subframe and downlink subframe of the backhaul link may be indicated by 6 bits.

In this example, through the conventional informing modes, the eNB may inform the RN of the allocated uplink subframe for performing uplink transmission of the backhaul link and the allocated downlink subframe for performing downlink transmission of the backhaul link.

Another informing mode is as follows. If the allocated subframes of the backhaul link are a subset of a predefined subframe allocation set, the eNB informs the RN of an index value of the subframes of the backhaul link in the subframe allocation set. For example, for a certain TDD configuration, different subframe allocation may be predefined according to the proportion of different subframes, to form the subframe allocation set. If the subframes of the backhaul link allocated by the eNB are one kind of subframes in the subframe allocation set, it is only needed to inform the RN of the index value of the subframes of the backhaul link in the subframe allocation set. The RN may determine the allocated subframes of the backhaul link according to a prestored subframe allocation set. The example will be illustrated hereinafter by taking a TDD configuration 1 as an example.

For the TDD configuration 1, according to the allocation proportion and location of different subframes, there are five modes for allocating the subframes of the backhaul link, so as to form the predefined subframe allocation set.

A first allocation mode: an uplink subframe 3 and a downlink subframe 9 are allocated as the subframes of the backhaul link.

A second allocation mode: a downlink subframe 4 and an uplink subframe 8 are allocated as the subframes of the backhaul link.

A third allocation mode: the uplink subframes 3 and 8 and the downlink subframes 4 and 9 are allocated as the subframes of the backhaul link.

A fourth allocation mode: the uplink subframe 3 and the downlink subframes 4 and 9 are allocated as the subframes of the backhaul link.

A fifth allocation mode: the uplink subframe 8 and the downlink subframes 4 and 9 are allocated as the subframes of the backhaul link.

Suppose the index values of the above five allocation modes are 1-5 respectively. If the eNB allocates the downlink subframe 4 and the uplink subrame 8 as the subframes of the backhaul link, the eNB informs the RN of the index value 2. The RN may determine, according to the prestored subframe allocation set, that the downlink subframe 4 and the uplinik subrame 8 are the subframes of the backhaul link.

It should be noted that, the above description is a schematic example, and will change according to different cases.

The eNB may inform the RN of the location or index value of the subframes of the backhaul link through a broadcast message or a higher-layer signaling. When the same subframe is allocated to all RNs in a cell served by the eNB, the eNB may inform the RN through the broadcast message, so save singling overhead. When different subframes are allocated to different RNs, the eNB respectively informs each RN through the higher-layer signaling. The higher-layer signaling includes, but is not limited to, a Radio Resourc Control (RRC) signaling.

In a subsequent procedure, the eNB may reallocate, according to the quality of the backhaul link and the data quantity of the backhaul link to be transmitted, an uplink subframe for performing uplink transmission of the backhaul link and a downlink subframe for performing downlink transmission of the backhaul link to the RN. The reallocation may be triggered by the eNB, or may be triggered by the RN.

### A) The reallocation may be triggered by the eNB.

The eNB counts Buffer States Reports (BSRs) which are reported by the RN in a predefined period of time, and adjusts, according to the BSRs, the number of uplink subframes for performing uplink transmission of the backhaul link which are allocated to the RN, i.e., if the buffer state indicates that the quantity of data to be transmitted to the eNB by the RN is large, the eNB increases the number of uplink subframes allocated to the RN; if the buffer state indicates that the quantity of data to be transmitted to the eNB by the RN is small, the eNB decreases the number of uplink subframes allocated to the RN. At the same time, the eNB counts buffer states which are transmitted to the RN by the eNB in a predefined period of time, and adjusts, according to the buffer states, the number of downlink subframes for performing downlink transmission of the backhaul link which is allocated to the RN. The above procedure of adjusting the number of subframes may be taken as a procedure of reallocating the subframes of the backhaul link.

### B) The reallocation may be triggered by the RN.

The RN transmits an adjusting request to the eNB according to the BSR which are reported to the eNB by the RN in a predefined period of time, to request to increase or decrease the number of needed subframes. The eNB adjusts, according to the adjusting request, the number of the uplink subframes for performing uplink transmission of the backhaul link which are allocated to the RN. At the same time, the eNB counts buffer states which are transmitted to the RN by the eNB in a predefined period of time, and adjusts, according to the buffer states, the number of the downlink subframes for performing downlink transmission of the backhaul link which are allocated to the RN. The above procedure of adjusting the number of subframes may be taken as a procedure of reallocating the subframes of the backhaul link.

Step 302: the RN receives from the eNB the allocation information of the uplink subframe for performing uplink transmission of the backhaul link and the downlink subframe for performing downlink transmission of the backhaul link, determines the location of the uplink subframe and downlink subframe of the backhaul link according to the allocation information, configures the downlink subframe of the backhaul link as an MBSFN subframe, and disables scheduling the UE served by the RN to perform uplink data transmission in the uplink subframe of the backhaul link.

In this step, after receiving the bitmap or the index value from the eNB, the RN respectively determines the location of the uplink subframe of the backhaul link and the location of the downlink subframe of the backhaul link according to the received information, configures the downlink subframe of the backhaul link as the MBSFN subframe, determines uplink scheduling information in advance according to the determined uplink subframe of the backhaul link, and disables scheduling the UE served by the RN to perform uplink data transmission in the uplink subframe of the backhaul link, so as to avoid uplink transmission conflict.

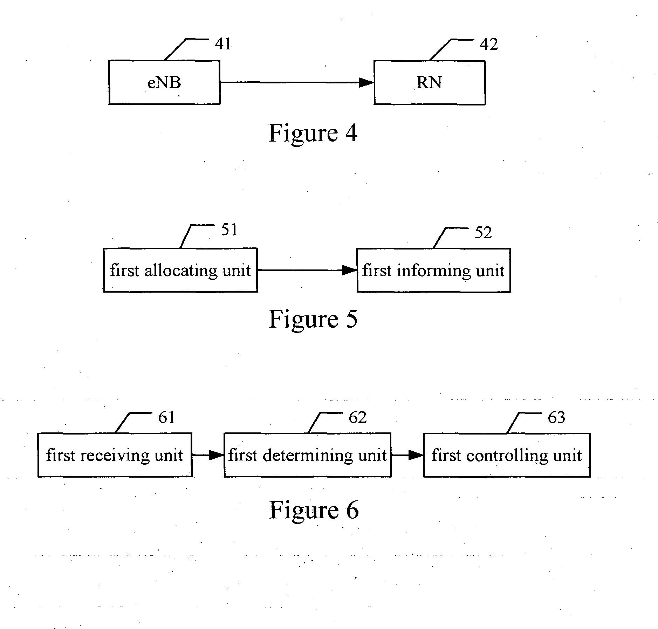

Based on the above method, Figure 4 is a schematic diagram illustrating the structure of a resource scheduling system according to the first example of the present invention. As shown in Figure 4, the system includes:
an eNB41, configured to allocate an uplink subframe for performing uplink transmission of a backhaul link and a downlink subframe for performing downlink transmission of the backhaul link, and inform a RN42 of the allocation information of the uplink subframe and downlink subframe of the backhaul link; and
the RN42, configured to receive the allocation information of the uplink subframe and downlink subframe of the backhaul link from the eNB41, determine the location of the uplink subframe and downlink subframe of the backhaul link, configure the downlink subframe of the backhaul link as an MBSFN subframe, and disable scheduling the UE served by the RN to perform uplink data transmission in the uplink subframe of the backhaul link.

Figure 5 is a schematic diagram illustrating the structure of an eNB according to the first example of the present invention. As shown in Figure 5, the eNB includes:
a first allocating unit 51, configured to allocate an uplink subframe for performing uplink transmission of a backhaul link and a downlink subframe for performing downlink transmission of the backhaul link;
a first informing unit 52, configured to inform a RN of the allocation information of the uplink subframe and downlink subframe of the backhaul link, so that the RN disables scheduling the UE served by the RN to perform uplink data transmission in the uplink subframe of the backhaul link, and configures the downlink subframe of the backhaul link as an MBSFN subframe.

Figure 6 is a schematic diagram illustrating the structure of a RN according to the first example of the present invention. As shown in Figure 6, the RN includes:
a first receiving unit 61, configured to receive allocation information of an uplink subframe for performing uplink transmission of a backhaul link and a downlink subframe for performing downlink transmission of the backhaul link from an eNB;
a first determining unit 62, configured to determine the location of the uplink subframe and downlink subframe of the backhaul link according to the received allocation information of the uplink subframe and downlink subframe of the backhaul link; and
a first controlling unit, configured to configure the downlink subframe of the backhaul link as an MBSFN subframe, and disable scheduling the UE served by the RN to perform uplink data transmission in the uplink subframe of the backhaul link.

The specific working procedure of the system and devices shown in Figures 4 to 6 may refer to the description of the method example shown in Figure 3, and will not be illustrated in detail herein.

In the solution shown in Figures 3 to 6, the eNB informs the RN of the allocated uplink subframe for performing uplink transmission of the backhaul link and the allocated downlink subframe for performing downlink transmission of the backhaul link. In this way, in a subsequent procedure, the RN may configure the downlink subframe of the backhaul link as an MBSFN subframe, and disable scheduling the UE served by the RN to perform uplink data transmission in the uplink subframe of the backhaul link, so as to avoid uplink transmission conflict.

However, the above solution has a problem in practical applications, i.e., since the eNB needs to inform the RN of the uplink subframe for performing uplink transmission of the backhaul link and the downlink subframe for performing downlink transmission of the backhaul link, signaling overhead is large, especially in an instance adopting the FDD mode.

Therefore, in the solution of the present invention, the eNB allocates the uplink subframe for performing uplink transmission of the backhaul link and the downlink subframe for performing downlink transmission of the backhaul link, and informs the RN of the allocation information of the uplink subframe or downlink subframe of the backhaul link, so that the RN determines, according to a predefined timing relationship, a downlink subframe or uplink subframe of the backhaul link of which the eNB does not inform.

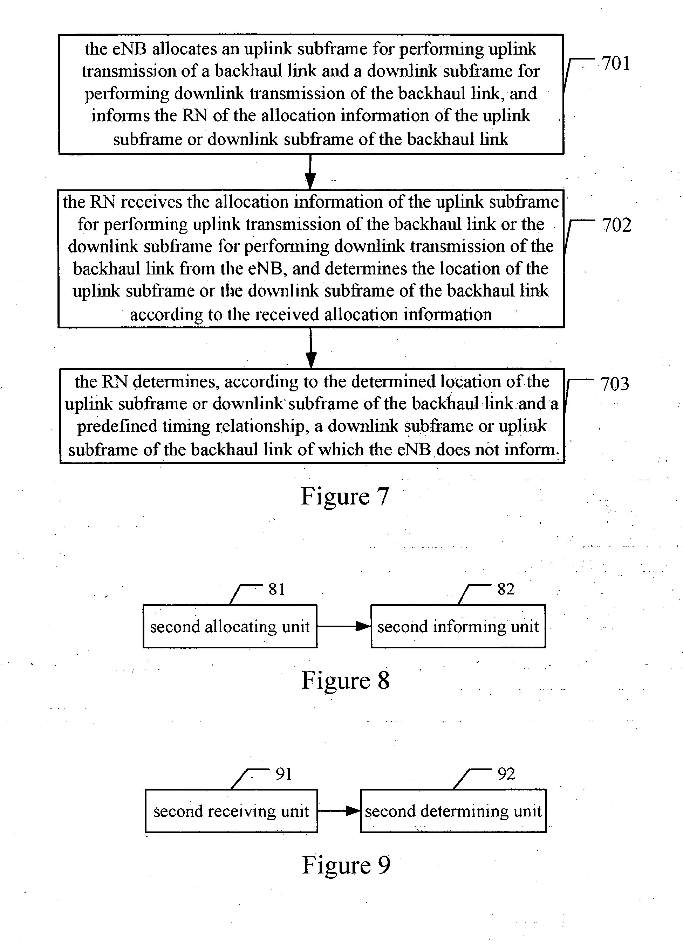

Figure 7 is a schematic flowchart illustrating a resource scheduling method according to a second example of the present invention. As shown in Figure 7, the method includes the following steps.

Step 701: the eNB allocates an uplink subframe for performing uplink transmission of a backhaul link and a downlink subframe for performing downlink transmission of the backhaul link, and informs the RN of the allocation information of the uplink subframe or downlink subframe of the backhaul link.

It is a conventional technology that how the eNB allocates the uplink subframe for performing uplink transmission of the backhaul link and the downlink subframe for performing downlink transmission of the backhaul link, and will not be described in detail.

In this example, the eNB only needs to inform the RN of one kind of subframes of the backhaul link, i.e. the eNB only needs to inform the RN of the allocation information of the uplink subframe for performing uplink transmission of the backhaul link or the downlink subframe for performing downlink transmission of the backhaul link. Specifically, the eNB may inform the RN through a higher-layer signaling or a broadcast message. The higher-layer signaling includes, but is not limited to, an RRC signaling.

Step 702: the RN receives the allocation information of the uplink subframe for performing uplink transmission of the backhaul link or the downlink subframe for performing downlink transmission of the backhaul link from the eNB, and determines the location of the uplink subframe or the downlink subframe of the backhaul link according to the received allocation information.

In this example, suppose the eNB informs the RN of the allocation information of the uplink subframe or downlink subframe of the backhaul link through a bitmap mode, the RN may determine that the location corresponding to a bit which is configured as 1 in the bitmap is the location of the uplink subframe or downlink subframe of the backhaul link.

Step 703: the RN determines, according to the determined location of the uplink subframe or downlink subframe of the backhaul link and a predefined timing relationship, a downlink subframe or uplink subframe of the backhaul link of which the eNB does not inform.

The predefined timing relationship mentioned herein includes a Hybrid Automatic Repeat Request (HARQ) timing relationship between a downlink subframe for transmitting uplink scheduling information and a corresponding uplink subframe for transmitting PUSCH, or a HARQ timing relationship between a downlink subframe for transmitting Physical Downlink Shared Channel (PDSCH) and a corresponding uplink subframe for transmitting uplink ACK/NACK, or a HARQ relationship between an uplink subframe for transmitting PUSCH and a corresponding downlink subframe for transmitting downlink ACK/NACK.

In the backhaul link, the uplink scheduling information is transmitted by the eNB in the downlink subframe, and correspondingly, the PUSCH is transmitted by the RN in the uplink subframe. The PDSCH is transmitted by the eNB in the downlink subframe, and correspondingly, the ACK/NACK is transmitted by the eNB in the uplink subframe. The PUSCH is transmitted by the RN in the uplink subframe, and correspondingly, the ACK/NACK is transmitted by the eNB in the downlink subframe.

The above timing relationships have been defined in the prior art, and the following is some examples.

In the FDD mode, if the PDSCH or the PUSCH is transmitted in a subframe n, the ACK/NACK is transmitted in a subframe n+4. If the uplink scheduling information is transmitted in the subframe n, the PUSCH is transmitted in the subframe n+4. That is to say, in the FDD mode, no matter which timing relationship is adopted, the distance between the location of the uplink subframe and the location of the downlink subframe is 4ms (the length of each subframe is 1ms). And thus, the RN may determine, according to any one of the above timing relationship, an uplink subframe for performing uplink transmission of the backhaul link or a downlink subframe for performing downlink transmission of the backhaul link of which the eNB does not inform. Generally, subframes 0, 4, 5 and 9 can not be configured as downlink subframes for performing downlink transmission of the backhaul link, i.e. MBSFN subframes.

In the TDD mode, the response location of ACK/NACK and the uplink scheduling location are both related to the uplink and downlink time sequence configuration, for example,
if the ACK/NACK is transmitted in the subframe n, a subframe for transmitting the PDSCH is a subframe n-k, where the value of k is as shown in Table 1.

**Table 1 a timing relation between ACK/NACK and PDSCH**

| Uplink-Downlink (UL-DL) Configuration | Subframe n | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7,6 | 4 | - | - | - | 7, 6 | 4 | - |
| 2 | - | - | 8,7,4,6 | - | - | - | - | 8, 7, 4, 6 | - | - |
| 3 | - | - | 7, 6, 11 | 6, 5 | 5, 4 | - | - | - | - | - |
| 4 | - | - | 12, 8, 7, 11 | 6, 5, 4, 7 | - | - | - | - | - | - |
| 5 | - | - | 13, 12, 9, 8, 7, 5, 4, 11,6 | - | - | - | - | - | - | - |
| 6 | - | - | 7 | 7 | 5 | - | - | 7 | 7 | - |

If the ACK/NACK is transmitted in a subframe 2, the PDSCH is transmitted in a subframe 2-6 (suppose the configuration mode 0 is adopted), i.e., the PDSCH is transmitted in the sixth subframe of a radio frame before a radio frame where the subframe 2 is located. It should be noted that, Table 1 shows 7 configuration modes (the configuration modes 0 and 5 usually are not used). In practical applications, it can be determined, according to practical requirements, which configuration mode is selected. The subsequent similar instances will not be described in detail.

If the uplink scheduling information is transmitted in the subframe n, a subframe for transmitting the PUSCH, i.e., the scheduled uplink subframe, is n+k. The value of k is as shown in Table 2.

**Table 2 a timing relation between a downlink subframe for transmitting uplink scheduling information and a scheduled uplink subframe**

| TDD UL/DL Configuration | DL subframe n | | | | | | | | | |
|---|---|---|---|---|---|---|---|---|---|---|
| | 0 | 1 | 2 | 3 | 4 | 5 | 6 | 7 | 8 | 9 |
| 0 | 4 | 6 | | | | 4 | 6 | | | |
| 1 | | 6 | | | 4 | | 6 | | | 4 |
| 2 | | | | 4 | | | | | 4 | |
| 3 | 4 | | | | | | | | 4 | 4 |
| 4 | | | | | | | | 4 | 4 | 4 |
| 5 | | | | | | | | | 4 | |
| 6 | 7 | 7 | | | | 7 | 7 | | | 5 |

If the PUSCH is transmitted in the subframe n, the ACK/NACK is transmitted in the subframe n+k. The value of k is as shown in Table 3.

**Table 3 a timing relation between PUSCH and ACK/NACK**

| TDD UL/DL Configuration | UL subframe n | | | | | | | | | |
|---|---|---|---|---|---|---|---|---|---|---|
| | 0 | 1 | 2 | 3 | 4 | 5 | 6 | 7 | 8 | 9 |
| 0 | | | 4 | 7 | 6 | | | 4 | 7 | 6 |
| 1 | | | 4 | 6 | | | | 4 | 6 | |
| 2 | | | 6 | | | | | 6 | | |
| 3 | | | 6 | 6 | 6 | | | | | |
| 4 | | | 6 | 6 | | | | | | |
| 5 | | | 6 | | | | | | | |
| 6 | | | 4 | 6 | 6 | | | 4 | 7 | |

In this example, one of the above three tables to be used may be stored in the RN, and then the RN searches the table according to the received information, to determine the downlink subframe for performing downlink transmission of the backhaul link or the uplink subframe for performing uplink transmission of the backhaul link.

In the FDD mode, since the distance between the location of uplink subframe and the location of the downlink subframe is fixed, the RN may determine the downlink subframe for performing downlink transmission of the backhaul link of which the eNB does not inform, where the distance between the location of the uplink subframe for performing uplink transmission of the backhaul link of which the eNB informs and the location of the downlink subframe for performing downlink transmission of the backhaul link of which the eNB does not inform is four subframes. Similarly, the RN may determine the uplink subframe for performing uplink transmission of the backhaul link of which the eNB does not inform, where the distance between the location of the downlink subframe for performing downlink transmission of the backhaul link of which the eNB informs and the location of the uplink subframe for performing uplink transmission of the backhaul link of which the eNB does not inform is four subframes.

In the TDD mode, the RN needs to search a specific table to determine the uplink subframe or the downlink subframe. Generally, subframes 0, 1, 5 and 6 can not be configured as downlink subframes for performing downlink transmission of the backhaul link, i.e., MBSFN subframes. After determining the uplink subframe or downlink subframe of the backhaul link of which the eNB informs, the RN searches the selected table, and then determines the downlink subframe or uplink subframe of the backhaul link of which the eNB does not inform.

In the FDD mode, suppose eNB allocates the downlink subframe 3 of each radio frame as the downlink subframe of the backhaul link, it can be determined, according to the HARQ timing relationship, that the subframe 7 of each radio frame is the uplink subframe of the backhaul link. This subframe configuration mode does not influence the HARQ timing relationship of the access link.

In the TDD configuration 1, suppose the eNB allocates the subframe 4 of each radio frame as the downlink subframe of the backhaul link, it can be determined that the subframe 8 of each radio frame is the uplink subframe of the backhaul link according to the HARQ timing relationship between the downlink subframe for transmitting the uplink scheduling information and the uplink subframe for transmitting PUSCH or the HARQ timing relationship between the downlink subframe for transmitting PDSCH and the uplink subframe for transmitting uplink ACK/NACK.

It should be noted that, the uplink and downlink subframe allocation methods in the FDD mode and the TDD mode are only examples, and the specific allocation method includes, but is not limited to, the above two allocation methods.

Based on the above method, the example of the present invention also provides a resource scheduling system, which includes: an eNB, configured to allocate an uplink subframe for performing uplink transmission of a backhaul link and a downlink subframe for performing downlink transmission of the backhaul link, and inform a RN of the allocation information of the uplink subframe or the downlink subframe of the backhaul link; and
the RN, configured to receive the allocation information of the uplink subframe for performing uplink transmission of the backhaul link or the downlink subframe for performing downlink transmission of the backhaul link from the eNB, determine the location of the uplink subframe or the downlink subframe of the backhaul link according to the received allocation information, and determine, according to a predefined timing relationship, a downlink subframe or uplink subframe of the backhaul link of which the eNB does not inform.

Figure 8 is a schematic diagram illustrating the structure of an eNB according to the second example of the present invention. As shown in Figure 8, the eNB includes:
a second allocating unit 81, configured to allocate an uplink subframe for performing uplink transmission of a backhaul link and a downlink subframe for performing downlink transmission of the backhaul link;
a second informing unit 82, configured to inform a RN of the allocation information of the uplink subframe or the downlink subframe of the backhaul link, so that the RN determines, according to a predefined timing relationship, a downlink subframe or uplink subframes of the backhaul link of which the eNB does not informs.

Figure 9 is a schematic diagram illustrating the structure of a RN according to the second example of the present invention. As shown in Figure 9, the RN includes:
a second receiving unit 91, configured to receive allocation information of an uplink subframe for performing uplink transmission of a backhaul link or a downlink subframes for performing downlink transmission of the backhaul link from an eNB;
a second determining unit 92, configured to determine the location of the uplink subframe and downlink subframe of the backhaul link according to the received allocation information, and determine, according to a predefined timing relationship, a downlink subframe or uplink subframe of the backhaul link of which the eNB does not informs.

In the technical solution as shown in Figures 7 to 9, the eNB only informs the RN of the allocated uplink subframe for performing uplink transmission of the backhaul link or the allocated downlink subframe for performing downlink transmission of the backhaul link, and then the RN self-determines, according to the received informing message and the prestored timing relationship, a downlink subframe for performing downlink transmission of the backhaul link or an uplink subframe for performing uplink transmission of the backhaul link of which the eNB does not inform. In this way, the eNB does not need to inform the RN of both the allocated uplink subframe and the allocated downlink subframe at the same time, so as to decrease signaling overhead.

The foregoing is only the preferred examples of the present invention and is not used to limit the protection scope of the present invention. Any modification, equivalent substitution and improvement without departing from the principle of the present invention are within the protection scope of the present invention, as defined in the present claims.

## Claims

1. A resource scheduling method, **characterized in that** the method comprises:
allocating (701), by a Base Station, BS, an uplink subframe for performing uplink transmission of a backhaul link and a downlink subframe for performing downlink transmission of the backhaul link, and sending (701) to a Relay Node, RN, one of allocation information of the uplink subframe and allocation information of the downlink frame, so that the RN determines (701), according to a predefined timing relationship, the allocated downlink subframe when receiving the allocation information of the uplink subframe from the BS, and determines (701), according to the predefined timing relationship, the allocated uplink subframe when receiving the allocation information of the downlink subframe from the BS; wherein
the predefined timing relationship comprises:
a Hybrid Automatic Repeat Request, HARQ, timing relationship between a downlink subframe for transmitting uplink scheduling information and an uplink subframe for transmitting Physical Uplink Shared Channel, PUSCH, or
a HARQ timing relationship between a downlink subframe for transmitting Physical Downlink Shared Channel, PDSCH, and an uplink subframe for transmitting uplink ACK/NACK, or
a HARQ timing relation between an uplink subframe for transmitting PUSCH and a downlink subframe for transmitting downlink ACK/NACK.

2. The method of claim 1, wherein sending to the RN one of the allocation information of the uplink subframe and the allocation information of the downlink frame comprises:
sending, by the BS, to the RN one of the allocation information of the uplink subframe and the allocation information of the downlink frame through a higher-layer signaling or a broadcast message.

3. The method of claim 1, wherein allocating, by the BS, the uplink subframe for performing uplink transmission of the backhaul link and the downlink subframe for performing downlink transmission of the backhaul link comprises one of:
allocating an uplink subframe 3 and a downlink subframe 9 as the subframes of the backhaul link;
allocating a downlink subframe 4 and an uplink subframe 8 as the subframes of the backhaul link;
allocating the uplink subframes 3 and 8 and the downlink subframes 4 and 9 as the subframes of the backhaul link;
allocating the uplink subframe 3 and the downlink subframes 4 and 9 as the subframes of the backhaul link; and
allocating the uplink subframe 8 and the downlink subframes 4 and 9 as the subframes of the backhaul link.

4. A resource scheduling method, **characterized in that** the method comprises:
receiving (701), by a Relay Node, RN, one of allocation information of an uplink subframe for performing uplink transmission of a backhaul link and allocation information of a downlink subframe for performing downlink transmission of the backhaul link from a Base Station, BS, wherein the uplink subframe and the downlink subframe are allocated by the BS;
determining (702), by the RN, location of the uplink subframe when receiving the allocation information of the uplink subframe, and determining (702) location of the downlink subframe when receiving the allocation information of the downlink subframe;
determining (703), by the RN, according to the determined location of the uplink subframe and a predefined timing relationship, the allocated downlink subframe when receiving the allocation information of the uplink subframe, and determining (703), according to the determined location of the downlink subframe and the predefined timing relationship, the allocated uplink subframe when receiving the allocation information of the downlink subframe; wherein
the predefined timing relationship comprises:
a Hybrid Automatic Repeat Request, HARQ, timing relationship between a downlink subframe for transmitting uplink scheduling information and an uplink subframe for transmitting Physical Uplink Shared Channel, PUSCH, or
a HARQ timing relationship between a downlink subframe for transmitting Physical Downlink Shared Channel, PDSCH, and an uplink subframe for transmitting uplink ACK/NACK, or
a HARQ timing relation between an uplink subframe for transmitting PUSCH and a downlink subframe for transmitting downlink ACK/NACK.

5. The method of claim 4, wherein receiving, by the RN, one of the allocation information of the uplink subframe and the allocation information of the downlink subframe from the BS comprises:
receiving, by the RN, one of the allocation information of the uplink subframe and the allocation information of the downlink frame through a higher-layer signaling or a broadcast message.

6. A Base Station, BS, **characterized in that** the BS comprises:
an allocating unit (81), configured to allocate an uplink subframe for performing uplink transmission of a backhaul link and a downlink subframe for performing downlink transmission of the backhaul link;
an informing unit (82), configured to send to a Relay Node, RN, one of allocation information of the uplink subframe and allocation information of the downlink frame, so that the RN determines, according to a predefined timing relationship, the allocated uplink subframe when receiving the allocation information of the downlink subframe from the BS, and determines, according to the predefined timing relationship, the allocated downlink subframe when receiving the allocation information of the uplink subframe from the BS; wherein
the predefined timing relationship comprises:
a Hybrid Automatic Repeat Request, HARQ, timing relationship between a downlink subframe for transmitting uplink scheduling information and an uplink subframe for transmitting Physical Uplink Shared Channel, PUSCH, or
a HARQ timing relationship between a downlink subframe for transmitting Physical Downlink Shared Channel, PDSCH, and an uplink subframe for transmitting uplink ACK/NACK, or
a HARQ timing relation between an uplink subframe for transmitting PUSCH and a downlink subframe for transmitting downlink ACK/NACK.

7. The BS of claim 6, wherein the allocating unit (81) is configured to allocate an uplink subframe 3 and a downlink subframe 9 as the subframes of the backhaul link; allocate a downlink subframe 4 and an uplink subframe 8 as the subframes of the backhaul link; allocate the uplink subframes 3 and 8 and the downlink subframes 4 and 9 as the subframes of the backhaul link; allocate the uplink subframe 3 and the downlink subframes 4 and 9 as the subframes of the backhaul link; or allocate the uplink subframe 8 and the downlink subframes 4 and 9 as the subframes of the backhaul link.

8. A Relay Node, RN, **characterized in that** the RN comprises:
a receiving unit (91), configured to receive one of allocation information of an uplink subframe for performing uplink transmission of a backhaul link and allocation information of a downlink frame for performing downlink transmission of the backhaul link from a Base Station, BS, wherein the uplink subframe and the downlink subframe are allocated by the BS;
a determining unit (92), configured to determine location of the uplink subframe when receiving the allocation information of the uplink subframe, determine location of the downlink subframe when receiving the allocation information of the downlink subframe, determine, according to the determined location of the uplink subframe and a predefined timing relationship, the allocated downlink subframe when receiving the allocation information of the uplink subframe, and determine, according to the determined location of the downlink subframe and the predefined timing relationship, the allocated uplink subframe when receiving the allocation information of the downlink subframe; wherein
the predefined timing relationship comprises:
a Hybrid Automatic Repeat Request, HARQ, timing relationship between a downlink subframe for transmitting uplink scheduling information and an uplink subframe for transmitting Physical Uplink Shared Channel, PUSCH, or
a HARQ timing relationship between a downlink subframe for transmitting Physical Downlink Shared Channel, PDSCH, and an uplink subframe for transmitting uplink ACK/NACK, or
a HARQ timing relation between an uplink subframe for transmitting PUSCH and a downlink subframe for transmitting downlink ACK/NACK.

## Patentansprüche

1. Ressourcenplanungsverfahren,
**dadurch gekennzeichnet, dass** das Verfahren umfasst:
- durch eine Basisstation, BS, erfolgendes Zuweisen (701) eines Aufwärts-Unterrahmens zum Ausführen einer Aufwärtsübertragung einer Rücktransport-Verbindungsangabe und eines Abwärts-Unterrahmens zum Ausführen einer Abwärtsübertragung der Rücktransport-Verbindungsangabe und Senden (701) einer von der Zuweisungsinformation des Aufwärts-Unterrahmens und der Zuweisungsinformation des Abwärts-Rahmens zu einem Weiterleitungsknoten, RN, derart, dass der Weiterleitungsknoten, RN, den zugewiesenen Abwärts-Unterrahmen entsprechend einer zuvor festgelegten Zeitbeziehung bestimmt (701), wenn die Zuweisungsinformation des Aufwärts-Unterrahmens von der Basisstation, BS, empfangen wird, und den zugewiesenen Aufwärts-Unterrahmen entsprechend der zuvor festgelegten Zeitbeziehung bestimmt (701), wenn die Zuweisungsinformation des Abwärts-Unterrahmens von der Basisstation, BS, empfangen wird,
wobei die zuvor festgelegte Zeitbeziehung umfasst:
- eine hybride automatische Wiederholungsanforderungs-HARQ-Zeitbeziehung zwischen einem Abwärts-Unterrahmen zum Übertragen einer Aufwärts-Planungsinformation und einem Aufwärts-Unterrahmen zum Übertragen eines gemeinsam benutzten physikalischen Aufwärtskanals, PUSCH, oder
- eine HARQ-Zeitbeziehung zwischen einem Abwärts-Unterrahmen zum Übertragen eines gemeinsam benutzten physikalischen Abwärtskanals, PDSCH, und einem Aufwärts-Unterrahmen zum Übertragen eines Aufwärts-ACK/NACK-Signals oder
- eine HARQ-Zeitbeziehung zwischen einem Aufwärts-Unterrahmen zum Übertragen des gemeinsam benutzten physikalischen Aufwärtskanals, PUSCH, und einem Abwärts-Unterrahmen zum Übertragen eines Abwärts-ACK/NACK-Signals.

2. Verfahren nach Anspruch 1, wobei das Senden von einer der Zuweisungsinformation des Aufwärts-Unterrahmens und der Zuweisungsinformation des Abwärts-Rahmens an den Weiterleitungsknoten, RN, umfasst:
- Senden einer der Zuweisungsinformation des Aufwärts-Unterrahmens und der Zuweisungsinformation des Abwärts-Rahmens von der Basisstation, BS, an den Weiterleitungsknoten, RN, durch eine Signalisierung einer höheren Schicht oder eine Rundsendenachricht.

3. Verfahren nach Anspruch 1, wobei die Zuweisung des Aufwärts-Unterrahmens zum Ausführen einer Aufwärtsübertragung der Rücktransport-Verbindungsangabe und des Abwärts-Unterrahmens zum Ausführen einer Abwärtsübertragung der Rücktransport-Verbindungsangabe durch die Basisstation, BS, umfasst einen Vorgang vom:
- Zuweisen eines Aufwärts-Unterrahmens 3 und eines Abwärts-Unterrahmens 9 als Unterrahmen der Rücktransport-Verbindungsangabe,
- Zuweisen eines Abwärts-Unterrahmens 4 und eines Aufwärts-Unterrahmens 8 als Unterrahmen der Rücktransport-Verbindungsangabe,
- Zuweisen der Aufwärts-Unterrahmen 3 und 8 und der Abwärts-Unterrahmen 4 und 9 als Unterrahmen der Rücktransport-Verbindungsangabe,
- Zuweisen des Aufwärts-Unterrahmens 3 und der Abwärts-Unterrahmen 4 und 9 als Unterrahmen der Rücktransport-Verbindungsangabe und
- Zuweisen des Aufwärts-Unterrahmens 8 und der Abwärts-Unterrahmen 4 und 9 als Unterrahmen der Rücktransport-Verbindungsangabe.

4. Ressourcenplanungsverfahren,
**dadurch gekennzeichnet, dass** das Verfahren umfasst:
- Empfangen (701) von einer der Zuweisungsinformation eines Aufwärts-Unterrahmens zum Ausführen einer Aufwärtsübertragung einer Rücktransport-Verbindungsangabe und der Zuweisungsinformation eines Abwärts-Unterrahmens zum Ausführen einer Abwärtsübertragung der Rücktransport-Verbindungsangabe durch einen Weiterleitungsknoten, RN, von einer Basisstation, BS, wobei der Aufwärts-Unterrahmen und der Abwärts-Unterrahmen durch die Basisstation, BS, zugewiesen werden,
- durch den Weiterleitungsknoten, RN, erfolgendes Bestimmen (702) der Lage des Aufwärts-Unterrahmens, wenn die Zuweisungsinformation des Aufwärts-Unterrahmens empfangen wird, und Bestimmen (702) der Lage des Abwärts-Unterrahmens, wenn die Zuweisungsinformation des Abwärts-Unterrahmens empfangen wird,
- durch den Weiterleitungsknoten, RN, erfolgendes Bestimmen (703) des zugewiesenen Abwärts-Unterrahmens entsprechend der bestimmten Lage des Aufwärts-Unterrahmens und einer zuvor festgelegten Zeitbeziehung, wenn die Zuweisungsinförmation des Aufwärts-Unterrahmens empfangen wird, und Bestimmen (703) des zugewiesenen Aufwärts-Unterrahmens entsprechend der bestimmten Lage des Abwärts-Unterrahmens und der zuvor festgelegten Zeitbeziehung, wenn die Zuweisungsinformation des Abwärts-Unterrahmens empfangen wird,
wobei die zuvor festgelegte Zeitbeziehung umfasst:
- eine hybride automatische Wiederholungsanforderungs-HARQ-Zeitbeziehung zwischen einem Abwärts-Unterrahmen zum Übertragen einer Aufwärts-Planungsinformation und einem Aufwärts-Unterrahmen zum Übertragen eines gemeinsam benutzten physikalischen Aufwärtskanals, PUSCH, oder
- eine HARQ-Zeitbeziehung zwischen einem Abwärts-Unterrahmen zum Übertragen eines gemeinsam benutzten physikalischen Abwärtskanals, PDSCH, und einem Aufwärts-Unterrahmen zum Übertragen eines Aufwärts-ACK/NACK-Signals oder
- eine HARQ-Zeitbeziehung zwischen einem Aufwärts-Unterrahmen zum Übertragen des gemeinsam benutzten physikalischen Aufwärtskanals, PUSCH, und einem Abwärts-Unterrahmen zum Übertragen eines Abwärts-ACK/NACK-Signals.

5. Verfahren nach Anspruch 4, wobei das Empfangen einer der Zuweisungsinformation des Aufwärts-Unterrahmens und der Zuweisungsinformation des Abwärts-Unterrahmens durch den Weiterleitungsknoten, RN, von der Basisstation, BS, umfasst:
- Empfangen einer der Zuweisungsinformation des Aufwärts-Unterrahmens und der Zuweisungsinformation des Abwärts-Rahmens mittels des Weiterleitungsknotens, RN, durch eine Signalisierung einer höheren Schicht oder eine Rundsendenachricht.

6. Basisstation, BS,
**dadurch gekennzeichnet, dass** die Basisstation, BS, umfasst:
- eine Zuweisungseinheit (81), die konfiguriert ist, um einen Aufwärts-Unterrahmen zum Ausführen einer Aufwärtsübertragung einer Rücktransport-Verbindungsangabe und einen Abwärts-Unterrahmen zum Ausführen einer Abwärtsübertragung der Rücktransport-Verbindungsangabe zuzuweisen,
- eine Informationseinheit (82), die konfiguriert ist, um eine der Zuweisungsinformation des Aufwärts-Unterrahmens und der Zuweisungsinformation des Abwärts-Rahmens an einen Weiterleitungsknoten, RN, zu senden, derart, dass der Weiterleitungsknoten, RN, den zugewiesenen Aufwärts-Unterrahmen entsprechend einer zuvor festgelegten Zeitbeziehung bestimmt, wenn die Zuweisungsinformation des Abwärts-Unterrahmens von der Basisstation, BS, her empfangen wird, und den zugewiesenen Abwärts-Unterrahmen entsprechend der zuvor festgelegten Zeitbeziehung bestimmt, wenn die Zuweisungsinformation des Aufwärts-Unterrahmens von der Basisstation, BS, her empfangen wird,
wobei die zuvor festgelegte Zeitbeziehung umfasst:
- eine hybride automatische Wiederholungsanforderungs-HARQ-Zeitbeziehung zwischen einem Abwärts-Unterrahmen zum Übertragen einer Aufwärts-Planungsinformation und einem Aufwärts-Unterrahmen zum Übertragen eines gemeinsam benutzten physikalischen Aufwärtskanals, PUSCH, oder
- eine HARQ-Zeitbeziehung zwischen einem Abwärts-Unterrahmen zum Übertragen eines gemeinsam benutzten physikalischen Abwärtskanals, PDSCH, und einem Aufwärts-Unterrahmen zum Übertragen eines Aufwärts-ACK/NACK-Signals oder
- eine HARQ-Zeitbeziehung zwischen einem Aufwärts-Unterrahmen zum Übertragen des gemeinsam benutzten physikalischen Aufwärtskanals, PUSCH, und einem Abwärts-Unterrahmen zum Übertragen eines Abwärts-ACK/NACK-Signals.

7. Basisstation, BS, nach Anspruch 6, wobei die Zuweisungseinheit (81) konfiguriert ist,
- um einen Aufwärts-Unterrahmen 3 und einen Abwärts-Unterrahmen 9 als Unterrahmen der Rücktransport-Verbindungsangabe zuzuweisen,
- um einen Abwärts-Unterrahmen 4 und einen Aufwärts-Unterrahmen 8 als Unterrahmen der Rücktransport-Verbindungsangabe zuzuweisen,
- um die Aufwärts-Unterrahmen 3 und 8 und die Abwärts-Unterrahmen 4 und 9 als Unterrahmen der Rücktransport-Verbindungsangabe zuzuweisen,
- um den Aufwärts-Unterrahmen 3 und die Abwärts-Unterrahmen 4 und 9 als Unterrahmen der Rücktransport-Verbindungsangabe zuzuweisen oder
- um den Aufwärts-Unterrahmen 8 und die Abwärts-Unterrahmen 4 und 9 als Unterrahmen der Rücktransport-Verbindungsangabe zuzuweisen.

8. Weiterleitungsknoten, RN,
**dadurch gekennzeichnet, dass** der Weiterleitungsknoten, RN, umfasst:
- eine Empfangseinheit (91), die konfiguriert ist, um von einer Basisstation, BS, eine von einer Zuweisungsinformation eines Aufwärts-Unterrahmens zum Ausführen einer Aufwärtsübertragung einer Rücktransport-Verbindungsangabe und einer Zuweisungsinformation eines Abwärts-Rahmens zum Ausführen einer Abwärtsübertragung der Rücktransport-Verbindungsangabe zu empfangen, wobei der Aufwärts-Unterrahmen und der Abwärts-Unterrahmen durch die Basisstation, BS, zugewiesen werden,
- eine Bestimmungseinheit (92), die konfiguriert ist, um die Lage des Aufwärts-Unterrahmens zu bestimmen, wenn die Zuweisungsinformation des Aufwärts-Unterrahmens empfangen wird, um die Lage des Abwärts-Unterrahmens zu bestimmen, wenn die Zuweisungsinformation des Abwärts-Unterrahmens empfangen wird, um den zugewiesenen Abwärts-Unterrahmen entsprechend der bestimmten Lage des Aufwärts-Unterrahmens und einer zuvor festgelegten Zeitbeziehung zu bestimmen, wenn die Zuweisungsinformation des Aufwärts-Unterrahmens empfangen wird, und um den zugewiesenen Aufwärts-Unterrahmen entsprechend der bestimmten Lage des Abwärts-Unterrahmens und der zuvor festgelegten Zeitbeziehung zu bestimmen, wenn die Zuweisungsinformation des Abwärts-Unterrahmens empfangen wird, wobei die zuvor festgelegte Zeitbeziehung umfasst:
- eine hybride automatische Wiederholungsanforderungs-HARQ-Zeitbeziehung zwischen einem Abwärts-Unterrahmen zum Übertragen einer Aufwärts-Planungsinformation und einem Aufwärts-Unterrahmen zum Übertragen eines gemeinsam benutzten physikalischen Aufwärtskanals, PUSCH, oder
- eine HARQ-Zeitbeziehung zwischen einem Abwärts-Unterrahmen zum Übertragen eines gemeinsam benutzten physikalischen Abwärtskanals, PDSCH, und einem Aufwärts-Unterrahmen zum Übertragen eines Aufwärts-ACK/NACK-Signals oder
- eine HARQ-Zeitbeziehung zwischen einem Aufwärts-Unterrahmen zum Übertragen des gemeinsam benutzten physikalischen Aufwärtskanals, PUSCH, und einem Abwärts-Unterrahmen zum Übertragen eines Abwärts-ACK/NACK-Signals.

## Revendications

1. Procédé de planification de ressources, **caractérisé en ce que** le procédé comporte :
l'allocation (701), par une station de base, BS, d'une sous-trame en liaison montante pour effectuer une transmission en liaison montante d'une liaison terrestre et d'une sous-trame en liaison descendante pour effectuer une transmission en liaison descendante de la liaison terrestre, et l'envoi (701) à un noeud de relais, RN, d'une d'une information d'allocation de la sous-trame en liaison montante et d'une information d'allocation de la trame en liaison descendante, de sorte que le RN détermine (701), selon une relation de synchronisation prédéfinie, la sous-trame en liaison descendante allouée lors de la réception de l'information d'allocation de la sous-trame en liaison montante depuis la BS, et détermine (701), selon la relation de synchronisation prédéfinie, la sous-trame en liaison montante allouée lors de la réception de l'information d'allocation de la sous-trame en liaison descendante depuis la BS ; dans lequel
la relation de synchronisation prédéfinie comporte :
une relation de synchronisation de requête de répétition automatique hybride, HARQ, entre une sous-trame en liaison descendante pour transmettre une information de planification en liaison montante et une sous-trame en liaison montante pour transmettre un canal physique partagé en liaison montante, PUSCH, ou
une relation de synchronisation HARQ entre une sous-trame en liaison descendante pour transmettre un canal physique partagé en liaison descendante, PDSCH, et une sous-trame en liaison montante pour transmettre un ACK/NACK en liaison montante, ou
une relation de synchronisation HARQ entre une sous-trame en liaison montante pour transmettre un PUSCH et une sous-trame en liaison descendante pour transmettre un ACK/NACK en liaison descendante.

2. Procédé selon la revendication 1, dans lequel l'envoi au RN de l'une de l'information d'allocation de la sous-trame en liaison montante et de l'information d'allocation de la trame en liaison descendante comporte :
l'envoi, par la BS, au RN de l'une de l'information d'allocation de la sous-trame en liaison montante et de l'information d'allocation de la trame en liaison descendante par l'intermédiaire d'une signalisation de couche supérieure ou d'un message de diffusion.

3. Procédé selon la revendication 1, dans lequel l'allocation, par la BS, de la sous-trame en liaison montante pour effectuer une transmission en liaison montante de la liaison terrestre et de la sous-trame en liaison descendante pour effectuer une transmission en liaison descendante de la liaison terrestre comporte l'une d'une :
allocation d'une sous-trame en liaison montante 3 et d'une sous-trame en liaison descendante 9 en tant que sous-trames de la liaison terrestre ;
allocation d'une sous-trame en liaison descendante 4 et d'une sous-trame en liaison montante 8 en tant que sous-trames de la liaison terrestre ;
allocation des sous-trames en liaison montante 3 et 8 et des sous-trames en liaison descendante 4 et 9 en tant que sous-trames de la liaison terrestre ;
allocation de la sous-trame en liaison montante 3 et des sous-trames en liaison descendante 4 et 9 en tant que sous-trames de la liaison terrestre ; et
allocation de la sous-trame en liaison montante 8 et des sous-trames en liaison descendante 4 et 9 en tant que sous-trames de la liaison terrestre.

4. Procédé de planification de ressources, **caractérisé en ce que** le procédé comporte :
la réception (701) par un noeud de relais, RN, d'une information d'allocation d'une sous-trame en liaison montante pour effectuer une transmission en liaison montante d'une liaison terrestre et d'une information d'allocation d'une sous-trame en liaison descendante pour effectuer une transmission en liaison descendante de la liaison terrestre depuis une station de base, BS, dans laquelle la sous-trame en liaison montante et la sous-trame en liaison descendante sont allouées par la BS ;
la détermination (702), par le RN, de l'emplacement de la sous-trame en liaison montante lors de la réception de l'information d'allocation de la sous-trame en liaison montante, et la détermination (702) de l'emplacement de la sous-trame en liaison descendante lors de la réception de l'information d'allocation de la sous-trame en liaison descendante ;
la détermination (703), par le RN, selon l'emplacement déterminé de la sous-trame en liaison montante et une relation de synchronisation prédéfinie, de la sous-trame en liaison descendante allouée lors de la réception de l'information d'allocation de la sous-trame en liaison montante, et la détermination (703) selon l'emplacement déterminé de la sous-trame en liaison descendante et la relation de synchronisation prédéfinie, de la sous-trame en liaison montante allouée lors de la réception de l'information d'allocation de la sous-trame en liaison descendante ; dans laquelle
la relation de synchronisation prédéfinie comporte :
une relation de synchronisation de requête de répétition automatique hybride, HARQ, entre une sous-trame en liaison descendante pour transmettre une information de planification en liaison montante et une sous-trame en liaison montante pour transmettre un canal physique partagé en liaison montante, PUSCH, ou
une relation de synchronisation HARQ entre une sous-trame en liaison descendante pour transmettre un canal physique partagé en liaison descendante, PDSCH, et une sous-trame en liaison montante pour transmettre un ACK/NACK en liaison montante, ou
une relation de synchronisation HARQ entre une sous-trame en liaison montante pour transmettre un PUSCH et une sous-trame en liaison descendante pour transmettre un ACK/NACK en liaison descendante.

5. Procédé selon la revendication 4, dans lequel la réception, par le RN, d'une de l'information d'allocation de sous-trame en liaison montante et de l'information d'allocation de sous-trame en liaison descendante depuis la BS comporte :
la réception, par le RN, d'une de l'information d'allocation de la sous-trame en liaison montante et de l'information d'allocation de la trame en liaison descendante par l'intermédiaire d'une signalisation de couche supérieure ou d'un message de diffusion.

6. Station de base, BS, **caractérisée en ce que** la BS comporte :
une unité d'allocation (81), configurée pour allouer une sous-trame en liaison montante pour effectuer une transmission en liaison montante d'une liaison terrestre et une sous-trame en liaison descendante pour effectuer une transmission en liaison descendante de la liaison terrestre;
une unité d'information (82), configurée pour envoyer à un noeud de relais, RN, l'une d'une information d'allocation de la sous-trame en liaison montante et d'une information d'allocation de la trame en liaison descendante, de sorte que le RN détermine, selon une relation de synchronisation prédéfinie, la sous-trame en liaison montante allouée lors de la réception de l'information d'allocation de la sous-trame en liaison descendante depuis la BS, et détermine, selon la relation de synchronisation prédéfinie, la sous-trame en liaison descendante allouée lors de la réception de l'information d'allocation de la sous-trame en liaison montante depuis la BS ; dans laquelle
la relation de synchronisation prédéfinie comporte :
une relation de synchronisation de requête de répétition automatique hybride, HARQ, entre une sous-trame en liaison descendante pour transmettre une information de planification en liaison montante et une sous-trame en liaison montante pour transmettre un canal physique partagé en liaison montante, PUSCH, ou
une relation de synchronisation HARQ entre une sous-trame en liaison descendante pour transmettre un canal physique partagé en liaison descendante, PDSCH, et une sous-trame en liaison montante pour transmettre un ACK/NACK en liaison montante, ou
une relation de synchronisation HARQ entre une sous-trame en liaison montante pour transmettre un PUSCH et une sous-trame en liaison descendante pour transmettre un ACK/NACK en liaison descendante.

7. BS selon la revendication 6, dans laquelle l'unité d'allocation (81) est configurée pour allouer une sous-trame en liaison montante 3 et une sous-trame en liaison descendante 9 en tant que sous-trames de la liaison terrestre ; allouer une sous-trame en liaison descendante 4 et une sous-trame en liaison montante 8 en tant que sous-trames de la liaison terrestre ; allouer les sous-trames en liaison montante 3 et 8 et les sous-trames en liaison descendante 4 et 9 en tant que sous-trames de la liaison terrestre ; allouer la sous-trame en liaison montante 3 et les sous-trames en liaison descendante 4 et 9 en tant que sous-trames de la liaison terrestre ; ou allouer la sous-trame en liaison montante 8 et les sous-trames en liaison descendante 4 et 9 en tant que sous-trames de la liaison terrestre.

8. Noeud de relais, RN, **caractérisé en ce que** le RN comporte :
une unité de réception (91), configurée pour recevoir l'une d'une information d'allocation d'une sous-trame en liaison montante pour effectuer une transmission en liaison montante d'une liaison terrestre et d'une information d'allocation d'une trame en liaison descendante pour effectuer une transmission en liaison descendante de la liaison terrestre depuis une station de base, BS, dans laquelle la sous-trame en liaison montante et la sous-trame en liaison descendantes sont allouées par la BS ;
une unité de détermination (92), configurée pour déterminer l'emplacement de la sous-trame en liaison montante lors de la réception de l'information d'allocation de la sous-trame en liaison montante, déterminer l'emplacement de la sous-trame en liaison descendante lors de la réception de l'information d'allocation de la sous-trame en liaison descendante, déterminer, selon l'emplacement déterminé de la sous-trame en liaison montante et d'une relation de synchronisation prédéfinie, la sous-trame en liaison descendante allouée lors de la réception de l'information d'allocation de la sous-trame en liaison montante, et déterminer, selon l'emplacement déterminé de la sous-trame en liaison descendante et la relation de synchronisation prédéfinie, la sous-trame en liaison montante allouée lors de la réception de l'information d'allocation de la sous-trame en liaison descendante ; dans laquelle
la relation de synchronisation prédéfinie comporte :
une relation de synchronisation de requête de répétition automatique hybride, HARQ, entre une sous-trame en liaison descendante pour transmettre une information de planification en liaison montante et une sous-trame en liaison montante pour transmettre un canal physique partagé en liaison montante, PUSCH, ou
une relation de synchronisation HARQ entre une sous-trame en liaison descendante pour transmettre un canal physique partagé en liaison descendante, PDSCH, et une sous-trame en liaison montante pour transmettre un ACK/NACK en liaison montante, ou
une relation de synchronisation HARQ entre une sous-trame en liaison montante pour transmettre un PUSCH et une sous-trame en liaison descendante pour transmettre un ACK/NACK en liaison descendante.
